(19) Europäisches Patentamt
European Patent Office
Office européen des brevets

(11) **EP 1 580 952 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(51) Int Cl.:
***H04L 27/36*** *(2006.01)*

(21) Anmeldenummer: **05005392.5**

(22) Anmeldetag: **11.03.2005**

(54) **Digitaler IQ-Modulator mit numerisch gesteuertem Frequenzsoszillator**

Digital IQ-Modulator with numerically controlled frequency oscillator

Modulateur IQ numérique avec un oscillateur à fréquence commandée numériquement

(84) Benannte Vertragsstaaten:
**DE FR GB**

(30) Priorität: **23.03.2004 DE 102004014148**

(43) Veröffentlichungstag der Anmeldung:
**28.09.2005 Patentblatt 2005/39**

(73) Patentinhaber: **Rohde & Schwarz GmbH & Co. KG 81671 München (DE)**

(72) Erfinder: **Kufer, Wolfgang 84453 Mühldorf (DE)**

(74) Vertreter: **Körfer, Thomas et al Mitscherlich & Partner Patent- und Rechtsanwälte Postfach 33 06 09 80066 München (DE)**

(56) Entgegenhaltungen:
GB-A- 2 270 447      US-A- 6 055 280
US-A- 6 104 252      US-A1- 2003 206 600

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen digitalen IQ-Modulator mit numerisch gesteuertem Frequenzoszillator.

Aufgrund der Orthogonalität der I-Signalkomponente zur Q-Signalkomponente in einem quadraturmodulierten Übertragungssignal und der damit einhergehenden Möglichkeit, zwei unterschiedliche, unabhängige informationstragende Signale in einem einzigen Signal gleichzeitig zu übertragen, hat sich die Quadraturmodulation zu einem weit verbreiteten Modulationsverfahren in der Übertragungstechnik entwickelt.

Auch digitale Realisierungen eines IQ-Modulators liegen bereits vor. In der EP 0 693 844 A2 ist ein digitaler IQ-Modulator dargestellt. Im wesentlichen besteht er aus einem numerischen Frequenzoszillator (numerical controlled oscillator, NCO), der zwei digitale um 90° phasenverschobene sinusförmige Trägersignale erzeugt, zwei digitalen Multiplizierern, die jeweils eines der beiden digitalen Trägersignale mit der Inphase-Komponente - I-Signal- bzw. mit der QuadraturphaseKomponente - Q-Signal - des digitalen Modulationssignals modulieren und einem digitalen Addierer, der das mit dem I-Signal modulierte Trägersignal zum mit dem Q-Signal modulierten Trägersignal addiert.

Der numerische Frequenzoszillator, der i.a. nach dem Prinzip der direkten digitalen Synthese (DDS) arbeitet, hat in einem Festwertspeicher (read only memory = ROM) die digitalisierten Pegelwerte der beiden um 90° phasenverschobenen sinusförmigen Trägersignale abgespeichert. Die Ausgabe der beiden digitalen sinusförmigen Trägersignale des direkten digitalen Frequenzsynthesizers erfolgt durch Addressierung der die sinusförmigen Pegelwerte beinhaltenden ROM-Speicherzellen über ein in einem Zähler generiertes sägezahnförmiges Adressierungssignal, dessen Frequenz der am Eingang des Zählers anliegenden, einstellbaren digitalen Taktfrequenz entspricht.

Aufgrund fehlender Frequenzstabilität der beiden Trägersignale am Ausgang des numerisch gesteuerten Frequenzoszillators wird das digitale quadraturmodulierte Signal am Ausgang des digitalen IQ-Modulator nach einer Digital-Analog-Wandlung und einer Bandpaßfilterung zur Anti-Aliasing-Filterung in einem separaten analogen Mischer in den Zwischenfrequenzbereich frequenzverschoben.

Nachteil dieser Anordnung eines digitalen IQ-Modulators ist die genannte fehlende Frequenzstabilität des Trägers, die einen zusätzlichen frequenzstabilisierten Mischer zur Frequenzverschiebung des quadraturmodulierten Signals in einen definierten Trägerfrequenzbereich, insbesondere in den Zwischenfrequenzbereich, erforderlich macht.

Die GB 2 270 447 A beschreibt einen Zwischenfrequenzchip, in dem ein digitales Zwischenfrequenzsignal synthetisiert wird.

Die US 2003/206600 A1 beschreibt einen QAM-Modulator, in dem die Rotation der Quadraturkomponenten mittels des Cordic-Algorithmus durchgeführt wird.

Der Erfindung liegt daher die Aufgabe zugrunde, den digitalen IQ-Modulator mit den Merkmalen gemäß dem Oberbegriff von Anspruch 1 derart weiterzubilden, daß neben der digitalen IQ-Modulation auch gleichzeitige eine digitale Mischung des quadraturmodulierten Signals in einen Trägerfrequenzbereich, insbesondere in den Zwischenfrequenzbereich, mit der bei derartigen Anwendungen erforderlichen Frequenzgenauigkeit verwirklicht ist.

Die Aufgabe der Erfindung wird durch einen digitalen IQ-Modulator mit den kennzeichnenden Merkmalen des Anspruchs 1 gelöst.

Zur Stabilisierung der Trägerfrequenz wird die Frequenz des Trägers am Ausgang des numerisch gesteuerten Frequenzoszillators erfaßt und in einem digitalen Phasenregelkreis (phase-locked loop = PLL) mit einem digitalen Trägerfrequenz-Sollwert, der z. B. aus einem analogen, von außen einstellbaren Trägerfrequenz-Sollwert durch Analog-Digital-Wandelung gewonnen wird, verglichen und bei Abweichung des Trägerfrequenz-Istwertes vom einstellbaren Trägerfrequenz-Sollwert der numerisch gesteuerte Frequenzoszillator vom digitalen Phasenregelkreis nachgeführt.

Durch diese Synchronisierung der Frequenz des Trägersignals mit einem einstellbaren Trägerfrequenz-Sollwert werden temporäre Frequenzschwankungen des Frequenztakts am Eingang des NCOs oder Inkrementier- und Rücksetzfehler im Zähler des NCOs in ihrer Auswirkung auf die Frequenz des Trägersignals am Ausgang des NCOs (überlagertes Phasenrauschen im Trägersignal) gedämpft und somit ein frequenzstabilisierter Träger generiert. Die Frequenzstabilisierung des Trägers ist unabdingbare Voraussetzung, um den digitalen IQ-Modulator gleichzeitig als Mischer für eine definierte Frequenzverschiebung des quadraturmodulierten Signals in einen Zwischenfrequenzbereich einzusetzen.

Vorteilhafte Ausgestaltungen der Erfindung sind in den abhängigen Ansprüchen angegeben.

Wird anstelle der beiden um 90° phasenverschobenen Trägersignale nach dem Stand der Technik ein komplexes Trägersignal benutzt, so können die beiden digitalen Multiplizierer und der digitale Addierer des digitalen IQ-Modulators nach dem Stand der Technik aufwandsoptimiert durch einen komplexen Multiplizierer ersetzt werden.

Dadurch, daß der komplexe Multiplizierer ein digitales, mit dem digitalen I-Signal moduliertes Zwischenfrequenzsignal und ein digitales, mit dem digitalen Q-Signal moduliertes Zwischenfrequenzsignal erzeugt, wird ein zusätzlicher Mischer für die Zwischenfrequenzverschiebung nicht mehr benötigt.

Das digitale Zwischenfrequenzsignal benötigt in Folge zwar einen schnellen Digital-Analog-Wandler, ist aber im Vergleich zu einer analogen Realisierung eines Mischer zur Zwischenfrequenzverschiebung von nichtlinearen Verzerrungen befreit.

Ein Ausführungsbeispiel der Erfindung ist in der Zeichnung dargestellt und wird nachfolgend näher beschrieben. Es zeigen:

Fig. 1    ein Blockschaltbild eines digitalen IQ-Modulators mit nachfolgenden Zwischenfrequenzmischer nach dem Stand der Technik und

Fig. 2    ein Blockschaltbild eines erfindungsgemäßen digitalen IQ-Modulators

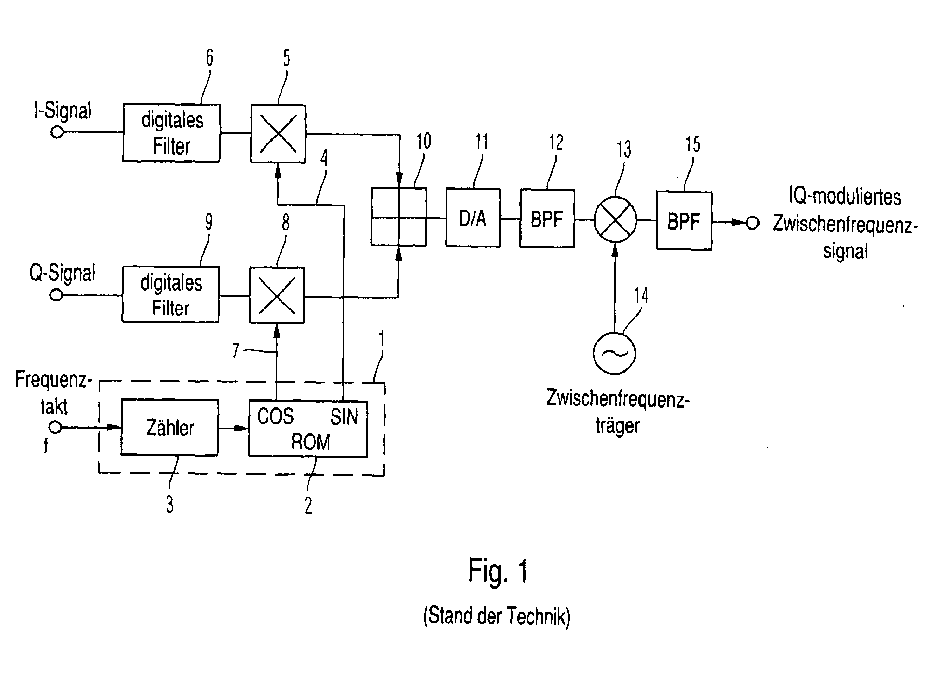

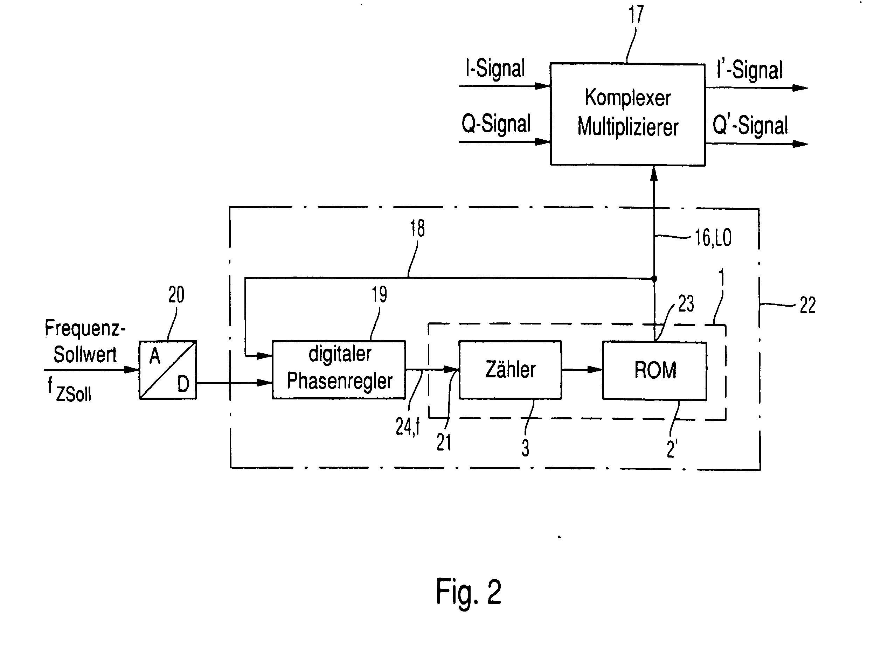

Der erfindungsgemäße IQ-Modulator wird ausgehend von einem digitalen IQ-Modulator mit nachfolgendem Zwischenfrequenzmischer nach dem Stand der Technik in Fig. 1 unter Bezugnahme auf Fig. 2 dargestellt.

Der digitale IQ-Modulator mit nachfolgendem Zwischenfrequenzmischer nach dem Stand der Technik in Fig. 1 besteht aus einem numerisch gesteuerten Frequenzoszillator 1, insbesondere einem direkten digitalen Frequenzsynthesizer 1, welcher wiederum sich aus einem Festwertspeicher (read only memory = ROM) 2 mit seinen in den Speicherzellen abgelegten Pegelwerten zweier gegeneinander um 90° phasenverschobenen, sinusförmigen Signalen (SIN, COS) und einem dem Festwertspeicher vorgeschalteten Zähler 3 zusammensetzt. Am Eingang des Zählers 3 liegt ein in seiner Frequenz einstellbarer Frequenztakt f an, der den Frequenz-Sollwert des im direkten digitalen Frequenzsynthesizer 1 erzeugten Trägersignals darstellt. Indem der Zähler 3 im angelegten Frequenztakt f inkrementiert wird und bei Zählerüberlauf automatisch rückgesetzt wird, entsteht im Zähler 3 ein digitales sägezahnförmiges Adressierungssignal zur Adressierung der mit den sinusförmigen Pegelwerten versehenen Speicherzellen des Festwertspeichers 2, dessen Frequenz proportional zum angelegten Frequenztakt f ist.

Durch Adressierung der Speicherzellen des Festwertspeichers 2 mit dem im Zähler 3 erzeugten sägezahnförmigen Adressierungssignal werden am Ausgang 23 des Festwertspeichers 2 ein erstes und zweites sinustreppenförmiges Trägersignal (SIN, COS) generiert, deren Frequenz der Frequenz des sägezahnförmigen Adressierungssignals und damit dem einstellbaren Frequenztakt f am Eingang des Zählers 3 entspricht und deren Phasenabweichung zueinander genau 90° beträgt.

Das erste sinusförmige Trägersignal (SIN) des direkten digitalen Frequenzsynthesizers 1 wird über die Signalleitung 4 einem ersten digitalen Multiplizierer 5 zur Modulation mit einem in einem dem ersten digitalen Multiplizierer 5 vorgelagerten ersten digitalen Filter 6 tiefpaßgefilterten digitalen I-Signal zugeführt. Das zweite sinusförmige Trägersignal (COS) des direkten digitalen Frequenzsynthesizers 1, das zum ersten sinusförmigen Trägersignal (SIN) genau 90° phasenverschoben ist, wird über die Signalleitung 7 einem zweiten digitalen Multiplizierer 8 zur Modulation mit einem in einem dem zweiten digitalen Multiplizierer 8 vorgelagerten zweiten digitalen Filter 9 tiefpaßgefilterten digitalen Q-Signal zugeführt.

In einem digitalen Addierer 10 wird das im ersten digitalen Multiplizierer 5 mit dem digitalen I-Signal modulierte erste sinusförmige Trägersignal mit dem im zweiten digitalen Multiplizierer 8 mit dem digitalen Q-Signal modulierte zweite sinusförmige Trägersignal zur Erzeugung des digitalen quadraturmodulierten Trägersignals addiert. Dieses digitale quadraturmodulierte Trägersignal wird in einem dem digitalen Addierer 10 nachfolgenden Digital-Analog-Wandler 11 in ein analoges quadraturmoduliertes Trägersignal gewandelt. Dieses analoge quadraturmodulierte Trägersignal wird anschließend in einem analogen Bandpaßfilter 12 gefiltert. Die Bandpaßfilterung dient einer Anti-Aliasing-Filterung des durch die Digital-Analog-Wandlung verursachten "treppenförmigen" Verlaufs des sinusförmigen quadraturmodulierten Trägersignals.

Im Anschluß an die Bandpaßfilterung wird das analoge quadraturmodulierte Trägersignal in einem Mischer 13 mittels eines in einem lokalen Frequenzoszillator 14 erzeugten Zwischenfrequenzträgers in den Zwischenfrequenzbereich frequenzverschoben.

In einem dem analogen Mischer 13 nachfolgenden Bandpaßfilter 15 wird das IQ-modulierte Frequenzsignal von seinen durch die Nichtlinearität des analogen Mischers 13 verursachten Intermodulationsprodukten im Frequenzspektrum befreit.

Der erfindungsgemäße digitale IQ-Modulator in Fig. 2 besteht ebenfalls aus einem direkten digitalen Frequenzsynthesizer 1', welcher wiederum einen Festwertspeicher (ROM) 2' und einen vorgelagerten Zähler 3 beinhaltet. Der direkte digitale Frequenzsynthesizer 1 des erfindungsgemäßen IQ-Modulators in Fig. 2 generiert anstelle zweier reeller, um 90° phasenverschobener sinusförmiger Trägersignale des direkten digitalen Frequenzsynthesizers 1 des digitalen IQ-Modulators nach dem Stand der Technik in Fig. 1 ein einziges komplexes Trägersignal $LO = e^{j2*\pi*f_t*t}$ mit der Trägerkreisfrequenz $\omega_t = 2*\pi*f_t$. Ansonsten entspricht die Funktionsweise des direkten digitalen Frequenzsynthesizers 1 des erfindungsgemäßen IQ-Modulators dem des IQ-Modulators nach dem Stand der Technik, so daß auf eine weitere detaillierte Funktionsbeschreibung an dieser Stelle verzichtet wird und auf die detaillierte Funktionsbeschreibung des direkten digitalen Frequenzsynthesizers 1 des digitalen IQ-Modulators nach dem Stand der Technik verwiesen wird.

Das vom direkten digitalen Frequenzsynthesizer 1 generierte komplexe Trägersignal wird über die Signalleitung 16 einem komplexen Multiplizierer 17 zugeführt. Im komplexen Multiplizierer 17 erfolgt eine komplexe Multiplikation des komplexen Trägersignals LO mit dem komplexen IQ-Modulationssignal IQ (mit seinen beiden Komponenten I-Signal I

und Q-Signal Q) zur Bildung des komplexen quadraturmodulierten Trägersignals IQ' (mit seinen beiden Komponenten I'-Signal I' und Q'-Signal Q') entsprechend der Gleichungen (1) bis (4):

$$LO = e^{j2 \cdot \pi \cdot f_t \cdot t} = \cos(2*\pi*f_t*t) + j * \sin(2*\pi*f_t*t) \tag{1}$$

$$IQ = I + j * Q \tag{2}$$

$$IQ' = I' + j * Q' \tag{3}$$

$$IQ' = IQ * LO = (I + j * Q) * (\cos(2*\pi*f_t*t) + j * \sin(2*\pi*f_t*t)) \tag{4}$$

Durch Ausmultiplikation von Gleichung (4) und Vergleich des Multiplikationsergebnisses mit Gleichung (3) ergeben sich die Inphase-Komponente I' und die Quadraturphasekomponente Q' des komplexen quadraturmodulierten Trägersignals IQ' aus Gleichung (5) und (6):

$$I' = I * \cos(2*\pi*f_t*t) - Q * \sin(2*\pi*f_t*t) \tag{5}$$

$$Q' = I * \sin(2*\pi*f_t*t) + Q * \cos(2*\pi*f_t*t) \tag{6}$$

Um mittels des komplexen Multiplizierers 17 zur Quadraturmodulation gleichzeitig auch eine präzise Mischung des IQ-Signals auf einen einstellbaren Trägerfrequenz-Sollwert zu erzielen, ist ein frequenzstabilisiertes komplexes Trägersignal nötig.

Hierzu wird das komplexe Trägersignal LO am Ausgang 23 des direkten digitalen Frequenzsynthesizers 1 über die Signalleitung 18 einem digitalen Phasenregler 19 zugeführt. Der digitale Phasenregler 19 vergleicht den aktuellen digitalen Trägerfrequenz-Istwert des komplexen Trägersignals LO mit einem digitalen Trägerfrequenz-Sollwert, der im Ausführungsbeispiel aus einem analogen einstellbaren Trägerfrequenz-Sollwert über einen Analog-Digital-Wandler 20 gewonnen wird, und regelt bei auftretender Regelabweichung zwischen eingestelltem Trägerfrequenz-Sollwert und gemessenem Trägerfrequenz-Istwert den Trägerfrequenz-Istwert am Ausgang 23 des direkten digitalen Frequenzsynthesizers 1 entsprechend seiner Reglerdynamik über das in der Signalleitung 24 anliegende Frequenzsignal f am Eingang 21 des Zählers 3 nach.

Auf diese Weise wird mittels des digitalen Phasenreglers 19, des direkten digitalen Frequenzsynthesizers 1 und der Rückkopplung mit Signalleitung 18 ein digitaler Phasenregelkreis (phase-locked loop = PLL) 22 realisiert, der in Kaskade zum direkten digitalen Frequenzsynthesizer 1 den Trägerfrequenz-Istwert des komplexen Trägerfrequenzsignals LO optimal an einen veränderbaren Trägerfrequenz-Sollwert nachregelt und auftretende Störungen in der Erzeugung des komplexen Trägersignals - z.B. lukrementier- und Rücksetzfehler im Zähler 3, temporäre Frequenzdriften und -schwebungen am Eingang 21 des Zählers 3 - in ihrer Auswirkung auf den Trägerfrequenz-Istwert optimal dämpft. Mithilfe des digitalen Phasenregelkreises 22 ist eine Frequenzstabilisierung des Trägerfrequenz-Istwertes des komplexen Trägersignals LO verwirklicht, die eine präzise Frequenzmischung des IQmodulierten Signals zu einem definierten Trägerfrequenzwert mittels des komplexen Multiplizierers 17 ermöglicht.

Wird am Eingang des Analog-Digital-Wandlers 20 für den analogen Trägerfrequenz-Sollwert ein analoger Zwischenfrequenz-Sollwert $f_{zsoll}$ gewählt, so ist mit der erfindungsgemäßen Anordnung in Fig. 2 eine Zwischenfrequenzquelle realisiert, die auf der Basis eines extern angelegten analogen Zwischenfrequenz-Sollwertes $f_{zsoll}$ ein IQ-moduliertes Signal auf den vorgebbaren Zwischenfrequenz-Sollwert $f_{zsoll}$ synchronisiert. Auf diese Weise ist eine Zwischenfrequenzquelle verwirklicht, die mit einem komplexen Multiplizierer zur IQ-Modulation und bei gleichzeitiger Frequenzmischung auf einen einstellbaren Zwischenfrequenz-Sollwert $f_{zsoll}$ ohne nachgeschalteten Zwischenfrequenzmischer auskommt.

**Patentansprüche**

1. Digitaler IQ-Modulator mit digitalen Multipliziereinheiten (17) zur Modulation eines digitalen Trägers (LO) mit einem digitalen I-Signal (I) und einem digitalen Q-Signal (Q) und einem numerisch gesteuerten Frequenzoszillator (1) zur Erzeugung des digitalen Trägers (LO),

   wobei zur Mischung des digitalen I-Signals (I) und des digitalen Q-Signals (Q) mit einem einstellbaren Frequenz-Sollwert ein digitaler Phasenregelkreis (22) vorgesehen ist, der ausgebildet ist, um den Frequenz-Istwert des digitalen Trägers (LO) des numerisch gesteuerten Frequenzoszillators (1) auf den einstellbaren Frequenz-Sollwert zu regeln, wobei der numerisch gesteuerte Frequenzoszillator (1) ein direkter digitaler Frequenzsynthesizer (1) ist, der aus einem Zähler (3) und einem nachfolgenden Festwertspeicher (2) mit in den Speicherzellen abgespeicherten Pegelwerten des digitalen Trägers (LO) besteht,

   wobei ein digitaler Phasenregler (19) des digitalen Phasenregelkreises (22) vorgesehen und

   wobei der digitale Phasenregler (19) ausgebildet ist, um den Frequenz-Istwert des digitalen komplexen Trägersignals (LO) am Ausgang (23) des direkten digitalen Frequenzsynthesizers (1) mit einem digitalen Frequenz-Sollwert zu vergleichen und bei Regelabweichung zwischen dem Frequenz-Sollwert und dem Frequenz-Istwert den Frequenz-Istwert des direkten digitalen Frequenzsynthesizers (1) über ein Zählsignal (f) am Eingang (21) des Zählers (3) nachzuregeln.

2. Digitaler IQ-Modulator nach Anspruch 1,
   **dadurch gekennzeichnet,**
   **dass** der einstellbare Frequenz-Sollwert ein einstellbarer Zwischenfrequenz-Sollwert ist.

3. Digitaler IQ-Modulator nach Anspruch 2,
   **dadurch gekennzeichnet,**
   **dass** der digitale Träger (LO) ein digitales komplexes Trägersignal (LO) mit dem geregelten Zwischenfrequenz-Istwert ist und die digitalen Multipliziereinheiten (17) in einem digitalen komplexen Multiplizierer (17) integriert sind.

4. Digitaler IQ-Modulator nach Anspruch 3,
   **dadurch gekennzeichnet,**
   **dass** der digitale komplexe Multiplizierer (17) ausgebildet ist, um ein mit dem dem digitalen I-Signal (I) und dem digitalen Q-Signal (Q) moduliertes digitales Zwischenfrequenzsignal (I') und ein mit dem I-Signal (I) und dem digitalen Q-Signal (Q) moduliertes digitales Zwischenfrequenzsignal (Q') zu erzeugen.

5. Digitaler IQ-Modulator nach Anspruch 1,
   **dadurch gekennzeichnet,**
   **dass** der digitale Frequenz-Sollwert aus dem Analogwert des einstellbaren Frequenz-Sollwerts durch Analog-Digital-Wandelung ableitbar ist.

6. Digitaler IQ-Modulator nach Anspruch 2,
   **dadurch gekennzeichnet,**
   **dass** der digitale Zwischenfrequenz-Sollwert aus dem Analogwert des einstellbaren Zwischenfrequenz-Sollwerts durch Analog-Digital-Wandelung entsteht.

**Claims**

1. A digital IQ modulator with digital multiplier units (17) for the modulation of a digital carrier (LO) with a digital I-signal (I) and a digital Q-signal (Q) and a numerically-controlled frequency oscillator (1) for the generation of the digital carrier (LO),

   wherein, in order to mix the digital I-signal (I) and the digital Q-signal (Q) with an adjustable set frequency value, a digital phase-locked loop (22) is provided, which is designed to adjust the actual frequency value of the digital carrier (LO) of the numerically-controlled frequency oscillator (1) to the adjustable set frequency value,

   wherein the numerically-controlled frequency oscillator (1) is a direct, digital frequency synthesiser (1), which consists of a counter (3) and a downstream read-only memory (2) with level values of the digital carrier (LO) stored in the memory cells,

   wherein a digital phase regulator (19) of the digital phase-locked loop (22) is provided and

   wherein the digital phase regulator (19) is designed to compare the actual frequency value of the complex digital carrier signal (LO) at the output (23) of the direct, digital frequency synthesiser (1) with a digital set frequency value, and, in the case of a deviation between the set frequency value and the actual frequency value, to adjust the actual frequency value of the direct, digital frequency synthesiser (1) via a counter signal (f) at the input (21) of the counter (3).

2. The digital IQ modulator according to claim 1,
   **characterised in that**
   the adjustable set frequency value is an adjustable set intermediate-frequency value.

3. The digital IQ modulator according to claim 2,
   **characterised in that**
   the digital carrier (LO) is a complex digital carrier signal (LO) with the adjusted actual intermediate-frequency value, and the digital multiplier units (17) are integrated within a complex digital multiplier (17).

4. The digital IQ modulator according to claim 3,
   **characterised in that**
   the complex digital multiplier (17) is designed to generate a digital intermediate-frequency signal (I') modulated with the digital I-signal (I) and the digital Q-signal (Q) and a digital intermediate-frequency signal (Q') modulated with the I-signal (I) and the digital Q-signal (Q).

5. The digital IQ modulator according to claim 1,
   **characterised in that**
   the digital set frequency value can be derived from the analog value of the adjustable set frequency value by analog-digital conversion.

6. The digital IQ modulator according to claim 2,
   **characterised in that**
   the digital set intermediate-frequency value is obtained from the analog value of the adjustable set intermediate-frequency value through analog-digital conversion.

**Revendications**

1. Modulateur IQ numérique comportant des multiplicateurs numériques (17) en vue de la modulation d'une porteuse numérique (LO) avec un signal I numérique (I) et un signal Q numérique (Q) et un oscillateur de fréquence à commande numérique (1) pour générer la porteuse numérique (LO),
   dans lequel, en vue du mélange du signal I numérique (I) et du signal Q numérique (Q) avec une valeur de consigne de fréquence pouvant être réglée, une boucle de verrouillage de phase numérique (22) est prévue, qui est formé, pour régler la valeur réelle de fréquence de la porteuse numérique (LO) de l'oscillateur de fréquence à commande numérique (1) sur la valeur de consigne de fréquence pouvant être réglée,
   dans lequel l'oscillateur de fréquence à commande numérique (1) est un synthétiseur de fréquence numérique direct (1), qui est constitué d'un compteur (3) et d'une mémoire morte suivante (2) avec les valeurs de niveau mémorisées dans les cellules de mémoire de la porteuse numérique (LO),
   dans lequel un dispositif de verrouillage de phase numérique (19) de la boucle de verrouillage de phase numérique (22) est prévu et
   dans lequel le régulateur de phase numérique (19) est réalisé, pour comparer la valeur réelle de fréquence du signal de porteuse complexe numérique (LO) à la sortie (23) du synthétiseur de fréquence numérique direct (1) à une valeur de consigne de fréquence numérique et de réajuster, dans le cas d'un écart de réglage entre la valeur de consigne de fréquence et la valeur réelle de fréquence, la valeur réelle de fréquence du synthétiseur de fréquence numérique direct (1) par l'intermédiaire d'un signal de comptage (f) à l'entrée (21) du compteur (3).

2. Modulateur IQ numérique selon la revendication 1, **caractérisé en ce que**
   la valeur de consigne de fréquence pouvant être réglée est une valeur de consigne de fréquence intermédiaire pouvant être réglée.

3. Modulateur IQ numérique selon la revendication 2, **caractérisé en ce que**
   la porteuse numérique (LO) est un signal de porteuse complexe numérique (LO) avec une valeur réelle de fréquence intermédiaire réglée et les multiplicateurs numériques (17) sont intégrés dans un multiplicateur complexe numérique (17).

**4.** Modulateur IQ numérique selon la revendication 3, **caractérisé en ce que**
le multiplicateur complexe numérique (17) est réalisé, afin de générer un signal de fréquence intermédiaire (I')
numérique modulé avec le signal I numérique (I) et le signal Q numérique (Q) et le signal de fréquence intermédiaire
(Q') numérique modulé avec le signal I (I) et le signal Q numérique (Q).

**5.** Modulateur IQ numérique selon la revendication 1, **caractérisé en ce que**
la valeur de consigne de fréquence numérique peut être dérivée d'une valeur analogique de la valeur de consigne
de fréquence pouvant être réglée par l'intermédiaire d'un convertisseur analogique-numérique.

**6.** Modulateur IQ numérique selon la revendication 2, **caractérisé en ce que**
la valeur de consigne de fréquence intermédiaire numérique résulte de la valeur analogique de la valeur de consigne
de fréquence intermédiaire pouvant être réglée par conversion analogique-numérique.

Fig. 1

(Stand der Technik)

EP 1 580 952 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0693844 A2
- GB 2270447 A
- US 2003206600 A1